# EUROPÄISCHE PATENTSCHRIFT

(11) **EP 3 658 321 B1**
(45) Veröffentlichungstag und Bekanntmachung des Hinweises auf die Patenterteilung: **17.01.2024**
(21) Anmeldenummer: 18746929.1
(22) Anmeldetag: 27.07.2018
(51) Int. Cl.: B23B 29/034

(54) **ZERSPANUNGSWERKZEUG**
CUTTING TOOL
OUTIL D'USINAGE PAR ENLÈVEMENT DE COPEAUX

(30) Priorität: 28.07.2017 DE 102017213048
(43) Veröffentlichungstag der Anmeldung: 03.06.2020
(73) Patentinhaber: Gühring KG, 72458 Albstadt (DE)
(72) Erfinder: HECKEL, Gerd, 90617 Puschendorf (DE); HOLLFELDER, Hans-Peter, 90768 Fürth (DE); THANNER, Jürgen, 91161 Hilpoltstein (DE)
(74) Vertreter: Winter, Brandl - Partnerschaft mbB
(86) Internationale Anmeldenummer: PCT/EP2018/070403
(87) Internationale Veröffentlichungsnummer: WO 2019/020786

(56) Entgegenhaltungen:
- EP-A2- 1 767 295
- WO-A2-03/013769
- CH-A- 429 375
- DE-A1- 19 613 897
- GB-A- 1 071 055
- JP-A- 2006 321 040
- RU-C1- 2 236 328
- US-A- 955 180
- US-A- 2 274 244
- US-A- 3 682 561
- US-A- 3 918 826
- US-A- 4 416 569
- US-A1- 2016 114 402

## Beschreibung

Die Erfindung betrifft ein Zerspanungswerkzeug mit einem sich entlang einer Längsmittelachse oder Drehachse erstreckenden Grundkörper, wenigstens einem am Grundkörper radial einstellbar angeordneten Schneidenträger und einer Stelleinrichtung zur Einstellung der Lage eines Schneidenträgers gegenüber dem Grundkörper, gemäß dem Oberbegriff des Anspruchs 1. Ein solches Zerspanungswerkzeug ist aus WO 03/013769 A bekannt.

Ein in der DE 4022579 A1 angegebenes Zerspanungswerkzeug hat einen um eine Drehachse drehantreibbaren Grundkörper und einen am Grundkörper radial einstellbar angeordneten Schneidenträger, der ein Schneidwerkzeug trägt. Der Schneidenträger ist als ein zweiarmiger Schwenkbalken ausgeführt, der in einem im Grundkörper quer zur Drehachse ausgerichteten Schwenklager unter radialer Verstellung des an dem einen Hebelarm des Schwenkbalkens angeordneten Schneidwerkzeugs, im Besonderen einer Wendeschneidplatte, schwenkbar angeordnet ist. Die Verstellung des Schneidenträgers erfolgt über eine Stelleinrichtung, die eine im Grundkörper axial verschiebbar angeordnete Stellstange (in der DE 4022579 A1 als Steuerstange bezeichnet) aufweist, die in einem axialen Abstand zueinander zwei, in einander entgegengesetzter Richtung gegenüber der Stangenachse schräg angestellte Steuerflächen hat, an denen jeweils einer der Hebelarme über einen im Grundkörper im Wesentlichen in Zustellrichtung des Schneidenträgers verschiebbaren Druckstift anliegt. Die Stelleinrichtung ermöglicht durch eine werkzeugmaschinenseitige bewirkte Verschiebung der Stellstange eine Verstellung des Schneidenträgers zwischen einer eingesteuerten Stellung, in der das am Schneidenträger gehaltene Schneidwerkzeug auf einem minimalen Durchmesser liegt, und einer ausgesteuerten Stellung, in der das am Schneidenträger gehaltene Schneidwerkzeug auf einem maximalen Durchmesser liegt.

In dem dem Schneidwerkzeug gegenüberliegenden Hebelarm des Schneidenträgers ist in einer den Schneidenträger durchsetzenden Gewindebohrung eine gegen die Stirnfläche des zugeordneten Druckstifts verstellbare Stellschraube (in der DE 4022579 A1 als Einstellbolzen bezeichnet) angeordnet. Die Stellschraube ermöglicht eine Justierung des Schneidenträgers relativ zur Längsmittelachse oder Drehachse des Grundkörpers bzw. der Stellstange im Grundkörper. Die Stellschraube bildet mit der Gewindebohrung eine in den Schneidenträger integrierte Justiereinrichtung für eine individuelle Lagejustierung des Schneidenträgers relativ zur Längsmittelachse oder Drehachse des Grundkörpers. Über diese Lagejustierung hinaus, die sich üblicherweise innerhalb eines sehr eng begrenzten Justierbereich abspielt, ist die Lage des Schneidenträgers aber nicht weiter einstellbar.

Zur Erreichung einer hohen Zustellgenauigkeit wird in der DE 4022579 A1 vorgeschlagen, den Schneidenträger fliehkraftneutral und spielfrei zu stellen. Hierzu wird eine Ausführungsform vorgeschlagen, bei der zwischen der Stellschraube einerseits und dem Druckstift andererseits ein Druckfederpaket angeordnet ist. Das Federpaket soll dafür sorgen, dass trotz der Herstellungsungenauigkeiten immer Spielfreiheit im Bereich des Verstellmechanismus gewährleistet ist. Das Federpaket übt auf die Stellschraube eine Druckkraft aus, durch die die, in Druckkraftrichtung gesehen, vorderen Gewindeflanken der Stellschraube gegen die gegenüberliegenden Gewindeflanken der Gewindebohrung gedrückt werden. Insofern wird ein Gewindespiel zwischen den vorderen Gewindeflanken der Stellschraube und den gegenüberliegenden Gewindeflanken der Gewindebohrung reduziert. Ein zwischen den hinteren Gewindeflanken der Stellschraube und den gegenüberliegenden Gewindeflanken der Gewindebohrung vorhandenes Gewindespiel bleibt aber bestehen bzw. wird sogar vergrößert. Bei einer zerspanenden Bearbeitung eines Werkstücks erfährt der Schneidenträger über das Schneidwerkzeug jedoch unvermeidbar in der Größe und/oder Richtung veränderliche Reaktionskräfte, die aufgrund des zwischen den hinteren Gewindeflanken der Stellschraube und den gegenüberliegenden Gewindeflanken der Gewindebohrung nach wie vor vorhandenen Gewindespiels in einer radialen Bewegung oder Schwingung des Schneidenträgers resultieren können. Eine Bewegung oder Schwingung des Schneidenträgers gefährdet jedoch die gewünschte hohe Zustellgenauigkeit oder Durchmessermaßhaltigkeit des Zerspanungswerkzeugs.

Die Druckschriften WO 03/013769 A2, RU 2 236 328 C1, US 3 918 826 A, US 4 416 569 A zeigen weitere Zerspanungswerkzeuge, die einen an einem Grundkörper radial einstellbar angeordneten Schneidenträger und eine Stelleinrichtung zur Einstellung der Lage des Schneidenträgers gegenüber dem Grundkörper aufweisen, wobei die Stelleinrichtung eine Gewindehülse und einen die Gewindehülse antreibenden Gewindetrieb enthält. Der Gewindetrieb des Zerspanungswerkzeugs der WO 03/013769 A2 ist aus einer Differentialgewindespindel gebildet, die mit konischen Hülsen verschraubt ist. Zur Reduzierung eines Gewindespiels haben die Hülsen einen Längsschlitz und sind jeweils in eine äußere Hülse gedrückt und fixiert. Eine Axialfeder, die sich an einer der äußeren Hülsen und einem am Grundkörper befestigten Deckel abstützt, sorgt für eine Eliminierung des Umkehrspiels.

Ausgehend von der WO 03/013769 A2 liegt der Erfindung nun die Aufgabe zugrunde, ein alternatives Zerspanungswerkzeug mit reduziertem Gewindespiel und einer zentralen Stelleinrichtung zu schaffen, mit der sich zur Erzielung einer hohen Durchmessermaßhaltigkeit einer Werkzeugschneide auf zuverlässige und einfache Weise eine präzise Lageeinstellung eines Schneidenträgers durchführen lässt.

Diese Aufgabe wird durch ein Zerspanungswerkzeug mit den Merkmalen des Anspruchs 1 gelöst. Vorteilhafte oder bevorzugte Weiterbildungen sind Gegenstand abhängiger Ansprüche.

Ein erfindungsgemäßes Zerspanungswerkzeug, das stehend oder drehend betrieben werden kann, hat, analog zu der aus der DE 4022579 A1 bekannten Zerspanungswerkzeug, einen sich entlang einer Längsmittelachse oder Drehachse erstreckenden Grundkörper, wenigstens einen am Grundkörper radial einstellbar angeordneten Schneidenträger und eine zentrale Stelleinrichtung zur Einstellung der Lage des Schneidenträgers gegenüber dem Grundkörper. Ein Beispiel für ein derartiges Zerspanungswerkzeug ist ein Feinbohrwerkzeug zum Aufbohren und Nachbearbeiten einer bereits vorgefertigten Bohrung, wie es beispielsweise in der eingangs diskutierten DE 4022579 A1 gezeigt und beschrieben ist. Nach dem Vorbild des in der DE 4022579 A1 angegebenen Zerspanungswerkzeugs wirkt der Schneidenträger mit der im Grundkörper angeordneten zentralen Stelleinrichtung über ein Keilgetriebe zusammen.

Es sei angemerkt, dass unter dem oben erwähnten Schneidenträger allgemein eine Einheit, ein Teil, ein Körper ein Mittel oder dergleichen verstanden wird, das - mittelbar oder unmittelbar - eine oder mehrere Schneiden für eine spanende Bearbeitung eines Werkstücks trägt. Ein erfindungsgemäßer Schneidenträger kann beispielsweise in der Art einer Wippe oder eines Schwenkbalkens als ein am Grundkörper schwenkbar gehaltener zweiarmiger Hebel, beispielsweise nach dem Vorbild der eingangs diskutierten DE 4022579 A1, oder in Art der eines am Grundkörper gehaltenen elastisch verformbaren Biegebalkens, z.B. als ein sogenannter Klemmhalter, im Besonderen Kurzklemmhalter, ausgebildet sein und ein Schneidwerkzeug, beispielsweise einen Schneideinsatz, eine Schneidplatte oder dergleichen, mit einer oder mehreren Schneiden tragen. Von einem derartigen Schneidenträger abweichend, der eine oder mehrere Schneiden - mittelbar - trägt, kann ein erfindungsgemäßer Schneidenträger aber auch aus einem einteilig aufgebauten oder einstückig gefertigten Schneidwerkzeug gebildet sein, beispielsweise in der Art eines Drehmeißels, eines Schneideinsatzes, einer Schneidplatte oder dergleichen, ausgebildet sein und eine oder mehrere Schneiden für eine spanende Bearbeitung eines Werkstücks - unmittelbar - tragen.

Im Unterschied zu dem in der DE 4022579 A1 angegebenen Zerspanungswerkzeug weist die Stelleinrichtung eines erfindungsgemäßen Zerspanungswerkzeugs nun eine im Grundkörper drehfest, aber axial, d.h. entlang der Längsmittelachse oder Drehachse, verschiebbar angeordnete Gewindehülse und einen die Gewindehülse antreibenden Gewindetrieb auf. Nach dem Vorbild des in der DE 4022579 A1 angegebenen Zerspanungswerkzeug wirkt die Gewindehülse über ein Keilgetriebe mit dem Schneidenträger zusammen.

In jedem Fall lässt die Stelleinrichtung des erfindungsgemäßen Zerspanungswerkzeugs dank des Gewindetriebs eine präzise, fein dosierte Lageeinstellung des Schneidenträgers relativ zur Längsmittelachse oder Drehachse zu. Erfindungsgemäß weist der Gewindetrieb eine mit der Gewindehülse verschraubte Gewindespindel auf, die durch eine Drehbeträtigung eine axiale Verschiebung der Gewindehülse bewirkt.

In einer bevorzugten Ausführungsform ist die Gewindespindel von der Stirnseite des Grundkörpers her betätigbar. Die Betätigung kann manuell oder werkzeugmaschinengesteuert erfolgen. Hierzu kann ein am Stirnende des Grundkörpers drehbeweglich, aber axialfest gehaltenes Betätigungselement vorgesehen sein, das mit der Gewindespindel drehfest, aber axialbeweglich in Eingriff ist.

Der die Gewindehülse verschiebende Gewindetrieb lässt durch eine axiale Verschiebung zu, den Schneidenträger zwischen einer eingesteuerten Stellung, in der das am Schneidenträger gehaltene Schneidwerkzeug auf einem minimalen Durchmesser liegt, und einer ausgesteuerten Stellung, in der das am Schneidenträger gehaltene Schneidwerkzeug auf einem maximalen Durchmesser liegt, zu verstellen. Der Gewindetrieb lässt daher eine von einer Verstellung zwischen der eingesteuerten Stellung und ausgesteuerten Stellung unabhängige präzise Feineinstellung des Schneidenträgers zu.

Eine derartige Verstellung des Schneidenträgers zwischen einer eingesteuerten Stellung, in der das am Schneidenträger gehaltene Schneidwerkzeug auf einem minimalen Durchmesser liegt, und einer ausgesteuerten Stellung, in der das am Schneidenträger gehaltene Schneidwerkzeug auf einem maximalen Durchmesser liegt, lässt sich beispielsweise dadurch realisieren, dass der Gewindetrieb mit einem in einem Druckraum im Grundkörper angeordneten Kolben verbunden ist. Der Kolben kann gegenüber dem Grundkörper elastisch, vorzugsweise federnd, abgestützt sein.

Erfindungsgemäß weist der Gewindetrieb eine mit der Gewindehülse verschraubte Gewindespindel auf. Diese Gewindespindel kann beispielsweise mit dem oben erwähnten Kolben verbunden sein, was aber nicht zwingend ist.

Um eine besonders feine Lageeinstellung zu erreichen, ist die Gewindespindel erfindungsgemäß aus einer Differentialgewindespindel gebildet. In diesem Fall weist der Gewindetrieb weiterhin eine zwischen der Gewindehülse und dem Kolben angeordnete Lagerbuchse auf, die beispielsweise mit dem oben erwähnten Kolben zug-/druckfest verbunden ist, und ist die Differentialgewindespindel mit einem ersten Gewindeabschnitt mit der Gewindehülse und mit einem zweiten Gewindeabschnitt mit der Lagerbuchse verschraubt.

Zur Reduzierung eines zwischen dem Gewindetrieb und der Gewindehülse unvermeidbaren Gewindespiels ist zwischen der Gewindehülse und der Lagerbuchse erfindungsgemäß eine Druckfeder angeordnet, wodurch sich eine hohe Durchmessermaßhaltigkeit erreichen lässt.

In diesem Sinne kann zwischen dem Schneidenträger und der Gewindehülse weiterhin eine dem Schneidenträger zugeordnete Justiereinrichtung angeordnet sein, die eine individuelle Lagejustierung des Schneidenträgers gegenüber dem Grundkörper ermöglicht. Diese Justiereinrichtung kann eine in den Schneidenträger integrierte Gewindebuchse mit einem radialelastisch verformbaren Wandsegment, eine mit der Gewindebuchse verschraubte und mit ihrem von der Gewindebuchse hervorragenden Ende an der Gewindehülse abgestützte Stellschraube, und ein an dem Schneidenträger angeordnetes, das Wandsegment gegen die Stellschraube drückendes Druckelement aufweisen. Dieser Justiereinrichtung liegt der Gedanke zugrunde, dass durch die Druckbeaufschlagung des elastisch nachgiebigen Wandsegments der Gewindebuchse ein dem Wandsegment entsprechender Bereich des Innengewindes der Gewindebuchse in einer Richtung quer zur Buchsenachse gegen das Außengewinde der in die Gewindebuchse eingeschraubten Stellschraube gedrückt wird, wodurch sich das Gewindespiel zwischen dem dem Wandsegment entsprechenden Bereich des Innengewindes der Gewindebuchse und dem Außengewinde der Stellschraube in beiden Achsrichtungen reduzieren lässt. Im Besonderen wird durch die Verdrängung des dem Wandsegment entsprechenden Bereichs des Innengewindes der Gewindebuchse nach innen gegen das Außengewinde der Stellschraube erreicht, dass die Gewindeflanken des Innengewindes in beiden Achsrichtung gegen die gegenüberliegenden Gewindeflanken des Außengewindes gedrückt werden. Damit wird eine axiale Bewegung der Stellschraube innerhalb der Gewindebuchse eingeschränkt. Dank des reduzierten Gewindespiels lässt sich eine axiale Bewegung der Stellschraube relativ zur Gewindebuchse und damit eine Bewegung zwischen dem Schneidwerkzeug und dem Grundkörper des Zerspanungswerkzeugs selbst dann einschränken, wenn das Schneidwerkzeuge während einer zerspanenden Bearbeitung eines Werkstücks veränderliche Zerspankräfte erfährt. Durch die erfindungsgemäße Justiereinrichtung lässt sich daher eine höhere Durchmessermaßhaltigkeit erreichen.

Das elastisch nachgiebige Wandsegment kann durch einen die Gewindebuchsenwand durchdringenden Schlitz, im Besonderen einen im Wesentlichen U-förmigen Schlitz, ausgebildet sein. Um über eine angemessene Länge eine das Gewindespiel zuverlässig reduzierende Anlage an der Stellschraube sicherzustellen, kann sich das Wandsegment in Axialrichtung der Gewindebuchse erstrecken.

Des Weiteren kann die Gewindebuchse zur Festlegung am Grundkörper, Schneidwerkzeug, Schneidenträger oder dergleichen an ihrem einen Ende einen einen Anschlag bildenden Flansch aufweisen. Über den Flansch kann die Lage der Gewindebuchse in Richtung der Buchsenahse festgelegt werden.

Das seitlich gegen das Wandsegment drückende Druckelement kann vorteilhaft aus einer mit dem Grundkörper, Schneidwerkzeug, Schneidenträger oder dergleichen verschraubten Spannschraube gebildet sein, die das Wandsegment gegen die Stellschraube drückt. Durch eine Drehbetätigung der Spannschraube ist eine einstellbare Reduzierung des Gewindespiels zwischen dem Außengewinde der Stellschraube und einem dem Wandsegment entsprechenden Bereich des Innengewindes der Gewindebuchse in der Weise möglich, dass eine Schraubbetätigung der Stellschraube gerade noch möglich ist, andererseits jedoch kein störendes Gewindespiel mehr vorhanden ist. Diese Weiterbildung bietet also die Möglichkeit, das Gewindespiel nicht lediglich zu reduzieren, sondern das Gewindespiel einzustellen bzw. zu korrigieren.

Ungeachtet der konkreten Ausgestaltung und Anordnung des Schneidenträgers am Grundkörper kann die Gewindebuchse in einer Durchgangsbohrung im Schneidenträger angeordnet sein, die von der dem Grundkörper abgewandten Seite her, beispielsweise radial von außen her, einen Betätigungszugriff auf die Stellschraube gestattet. Die Gewindebuchse kann im Schneidenträger in Axial- und/oder Umfangsrichtung der Durchgangsbohrung stoff-, form- und/oder kraftschlüssig festgelegt sein.

Ein erfindungsgemäßes Zerspanungswerkzeug kann eine Vielzahl von Schneidenträgern aufweisen, die in vorgegebenen, vorzugsweise gleichen, Winkelabständen um die Drehachse herum angeordnet und jeweils an der Gewindehülse abgestützt sind. Über die zentrale Stelleinrichtung kann eine synchrone Verstellung und/oder Einstellung aller Schneidenträger bewirkt werden. Gleichzeitig kann jeder Schneidenträger über eine zugeordnete Justiereinrichtung invidiuell justiert werden.

Nachfolgend wird mit Hilfe der beigefügten Zeichnungen eine bevorzugte Ausführungsform eines mehrschneidigen Zerspanungswerkzeugs mit einer erfindungsgemäßen Justiereinrichtung beschrieben. Es zeigt/zeigen:
Fig. 1 eine perspektivische Seitenansicht eines mehrschneidigen Zerspanungswerkzeugs mit einer erfindungsgemäßen Justiereinrichtung;
Fig. 2 eine Längsschnittansicht des Zerspanungswerkzeugs;
Fig. 3 eine Querschnittansicht des Zerspanungswerkzeugs an der in Fig. 2 durch eine Linie III-III gekennzeichneten Stelle;
Fig. 4 eine perspektivische Seitenansicht eines ein Schneidwerkzeug tragenden Schneidenträgers; und
Fig. 5 und 6 verschiedene Ansichten einer wandsegmentgeschlitzten Gewindebuchse der erfindungsgemäßen Justiereinrichtung.

### Bevorzugte Ausführungsform

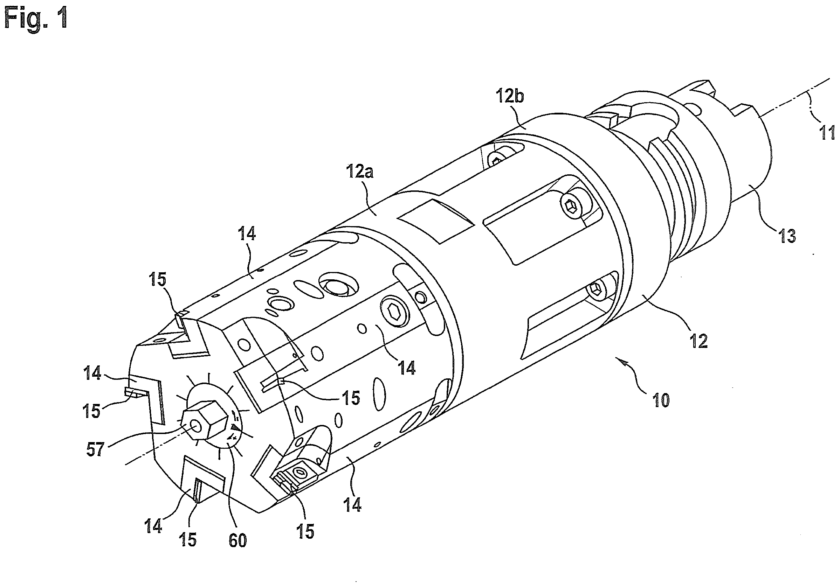

Die Fig. 1 zeigt in einer perspektivischen Seitenansicht ein mehrschneidiges Zerspanungswerkzeug 10, das beispielsweise für die Bearbeitung einer Zylinderbohrung eines Verbrennungsmotors eingesetzt wird. Das Zerspanungswerkzeug 10 kann daher auch als ein Zylinderbohrungsbearbeitungswerkzeug oder allgemein als Bohrungsnachbearbeitungs- oder Bohrungsfeinbearbeitungswerkzeug bezeichnet werden.

Das Zerspanungswerkzeug 10 hat einen sich entlang einer Längsmittelachse oder Drehachse 11 erstreckenden Grundkörper 12, der in der gezeigten Ausführungsform aus einem vorderen Teil und einem hinteren Teil modular aufgebaut ist. Wie die Fig. 1 zeigt, sind der vordere Teil 12a und der hintere Teil 12b miteinander verschraubt. An seinem hinteren (in Fig. 1 rechten) Ende weist das Zerspanungswerkzeug 10 einen mit beispielsweise einer Werkzeugmaschinenspindel zu verbindenden Kupplungsschaft 13 auf, der in der gezeigten Ausführungsform aus einem HSK (Hohlschaftkegel)-Schaft gebildet ist. Alternativ dazu kann aber auch beispielsweise ein sogenannter SK- (Steilkegel)-Schaft oder dergleichen vorgesehen sein. Das Zerspanungswerkzeug 10 kann stehend oder drehangetrieben eingesetzt werden.

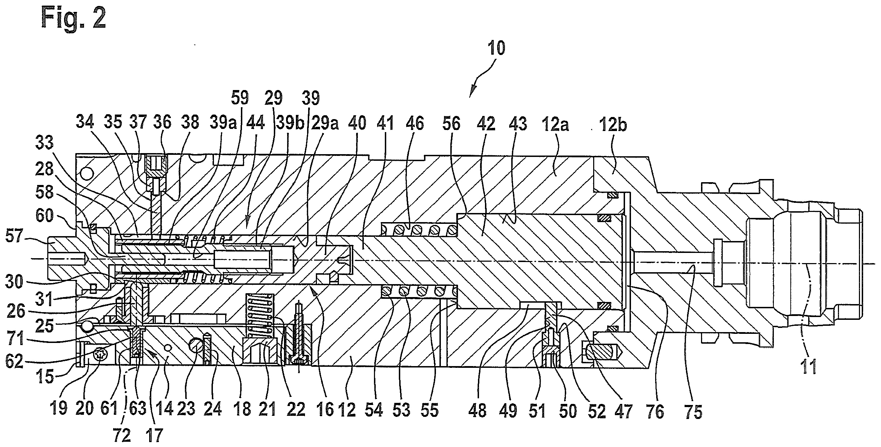

An dem vorderen (in Fig. 1 linken) Ende des Zerspanungswerkzeugs 10 sind in äquidistanter Winkelteilung im Grundkörper 12 fünf Schneidenträger 14 angeordnet. Jeder Schneidenträger 14 trägt ein Schneidwerkzeug 15, beispielsweise einen Schneideinsatz, eine Schneidplatte oder dergleichen, und ist über eine in Fig. 2 zu sehende zentrale Stelleinrichtung 16 synchron mit den jeweils anderen Schneidenträgern 14 radial nach innen oder außen verstellbar. Unabhängig davon ist jeder Schneidenträger 14 über eine zugeordnete Justiereinrichtung 17 in radialer Richtung relativ zu der zentralen Stelleinrichtung 16 bzw. zur Längsmittelachse oder Drehachse 11 des Grundkörpers 12 individuell lagejustierbar.

### Schneidenträger 14

Die Schneidenträger 14 zeichnen sich alle durch einen gleichen Aufbau und eine gleiche Funktionsweise aus, so dass im Folgenden der Aufbau und die Funktionsweise der Schneidenträger 14 am Beispiel des in Fig. 2 gezeigten, untenliegenden Schneidenträgers 14 näher beschrieben werden.

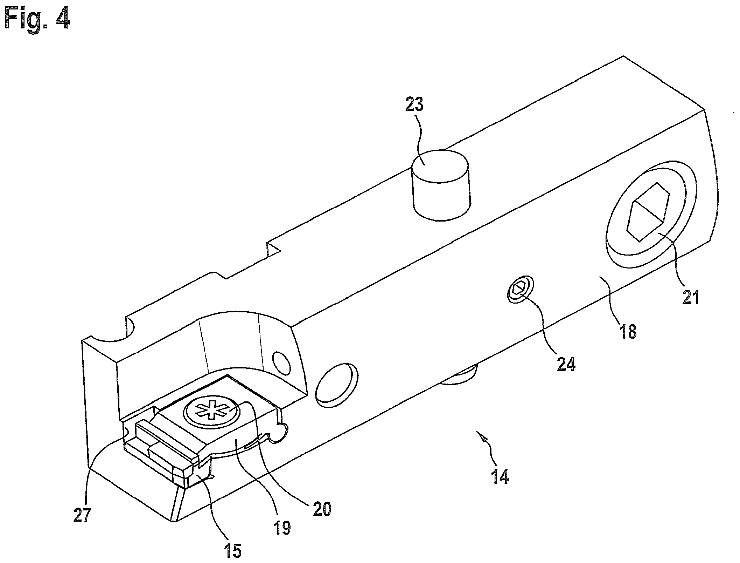

Der in Fig. 4 in größerem Maßstab gezeigte Schneidenträger 14 weist im Wesentlichen einen Trägerkörper 18, das am Trägerkörper 18 gehaltene Schneidwerkzeug 15, eine Klemmpratze 19 zum Festklemmen des Schneidwerkzeugs 15, eine Klemmschraube 20, die Justiereinrichtung 17, eine Federanschlagschraube 21, eine Druckfeder 22, einen Lagerbolzen 23 und eine Sicherungsschraube 24 auf.

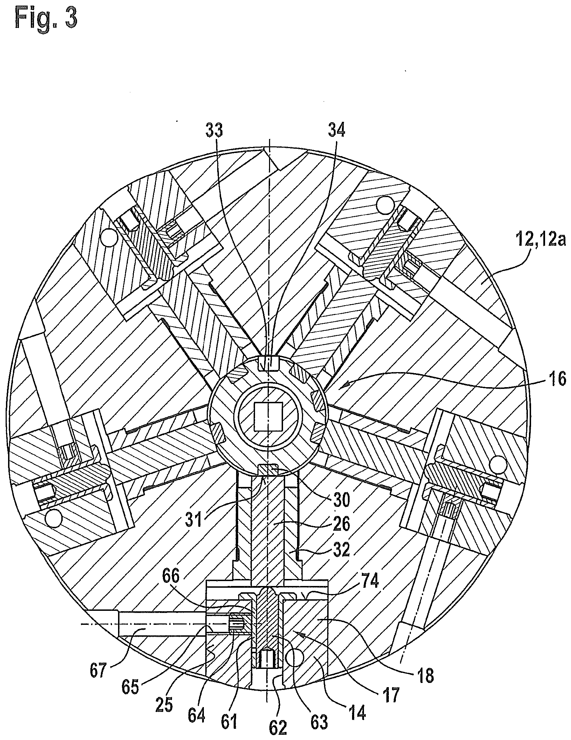

Man erkennt in Fig. 3, dass der Trägerkörper 18 aus einem prismatischen oder quaderförmigen Block gefertigt ist, der in einer sich in Richtung der Längsmittelachse oder Drehachse 11 des Grundkörpers 12 erstreckenden prismatischen oder quaderförmigen, stirn- und außenumfangsseitig offenen Aufnahmetasche 25 im Grundkörper 12 aufgenommen ist, die in einem radialen Abstand zur Längsmittelachse oder Drehachse 11 ausgebildet ist. Bezogen auf eine die Längsmittelachse oder Drehachse 11 enthaltende Längsschnittebene (vgl. Fig. 3) ist die Aufnahmetasche 25 im Querschnitt im Wesentlichen symmetrisch geformt.

Der Schneidenträger 14 ist in der Aufnahmetasche 25 über einen am Grundkörper 12 gelagerten Lagerbolzen 23 schwenkbeweglich gehalten. Der den Trägerkörper 18 durchdringende Lagerbolzen 23 erstreckt sich in einer Richtung quer zur Längsmittelachse oder Drehachse 11 und ist beidseits des Trägerkörper 18 in nicht näher bezeichneten Achsbohrungen im Grundkörper 12 angeordnet. Der Lagerbolzen 23 ist durch die außenumfangsseitig zugängliche, im Trägerkörper 18 verschraubte Sicherungsschraube 24 am Trägerkörper 18 verliersicher befestigt. Der Schneidenträger 14 ist damit in der Aufnahmetasche 25 um eine quer zur Längsmittelachse oder Drehachse 11 ausgerichtete Schwenkachse schwenkbar aufgenommen.

Der Trägerkörper 18 bildet damit einen zweiseitigen Hebel, der in der Art einer Wippe schwenkbar gelagert ist. Wie es in Fig. 2 gezeigt ist, ist die Justiereinrichtung 17 in Fig. 2 auf der Seite des linken, längeren Hebelarms angeordnet, während die Druckfeder 22 und Federanschlagschraube 21 auf der Seite des rechten, kürzeren Hebelarms angeordnet sind. Die Federanschlagschraube 21 bildet einen trägerkörperseitigen Anschlag für die Druckfeder 22. Die Druckfeder 22 übt über den kürzeren Hebelarm auf den Schneidenträger 14 eine Federkraft dergestalt aus, dass der Schneidenträger 14 in Fig. 2 im Uhrzeigersinn verschwenkt wird. Die Fig. 2 zeigt, dass der Trägerkörper 18 an dem längeren Hebelarm über die Justiereinrichtung 17 und einen im Grundkörper 12 radial verschiebbar angeordneten Druckstift 26 an der zentralen Stelleinrichtung 16 abgestützt ist.

Das Schneidwerkzeug 15 ist, wie es in Fig. 4 gezeigt ist, in einem in den Trägerkörper 18 eingearbeiteten stirn- und außenumfangsseitig zugänglichen Sitz 27 formschlüssig aufgenommen und wird durch Betätigung der Klemmschraube 20 über die Klemmpratze 19 gegen den Trägerkörper 18 geklemmt.

### Stelleinrichtung 16

Die zentrale Stelleinrichtung 16 weist, wie es in Fig. 2 gezeigt ist, eine im Grundkörper 12 angeordnete Gewindehülse 28 und einen die Gewindehülse 28 axial verschiebenden Gewindetrieb 29 auf.

Die Gewindehülse 28 bildet ein eine radiale Verstellung der Schneidenträger 14 bewirkendes Stellmittel. Sie ist in einer zentralen Bohrung 29a im Grundkörper 12 drehfest, aber axial verschiebbar angeordnet und wirkt über ein Keilgetriebe mit den Schneidenträgern 14 zusammen. Die Gewindehülse 28 weist hierzu, wie es in Fig. 3 gezeigt ist, an ihrem Außenumfang eine der Anzahl der Schneidenträger 14 entsprechende Zahl von Stützleisten 30 auf. Jede Stützleiste 30 ist dabei einem der Schneidenträger 14 zugeordnet und hat außenseitig eine gegenüber der Längsmittelachse oder Drehachse 11 schräg angestellte Steuerfläche 31, an der ein mit dem Schneidenträger 14 zusammenwirkender Druckstift 26 anliegt. Jeder Druckstift 26 ist in einer im Grundkörper 12 festgelegten Führungsbuchse 32 radial verschiebbar angeordnet. Die Steuerschräge 31 bildet mit der Stirnseite des Druckstifts 26 das oben erwähnte Keilgetriebe, das eine axiale Bewegung der Gewindehülse 28 in eine radiale Bewegung des Druckstifts 26 umwandelt. Die drehfeste Anordnung der Gewindehülse 28 in der zentralen Bohrung 29a im Grundkörper 12 wird durch einen in einen axialen Längsschlitz 33 am Außenumfang der Gewindehülse 28 eingreifenden Sperrstift 34 erreicht, der in einer radialen Stufenbohrung 35 im Grundkörper 12 lösbar gehalten wird. Wie die Fig. 2 zeigt, wird der Eingriff des Sperrstifts 34 in den Längsschlitz 33 der Gewindehülse 28 durch eine Sicherungsschraube 36 gesichert. Der Sperrstift 34 hat einen im Durchmesser vergrößerten Kopf 37, der radial nach innen gegen eine Stufe 38 der Stufenbohrung 35 anschlägt. Durch die so erreichte Festlegung des Sperrstifts 34 in radialer Richtung lässt sich verhindern, dass der Sperrstift 34 gegen den Grund des Längsschlitzes 33 drückt und dadurch die axiale Verschiebbarkeit der Gewindehülse 28 behindert. In Fig. 3 ist nur das in den Längsschlitz 33 eingreifende Ende des Sperrstifts 34 zu sehen, das in einem radialen Abstand zum Grund des Längsschlitzes 33 gehalten ist.

Der axiale Antrieb der Gewindehülse 28 erfolgt über den Gewindetrieb 29. Der Gewindetrieb 29 weist, wie es in Fig. 2 gezeigt ist, im Wesentlichen eine Gewindespindel 39 und eine in einem axialen Abstand zur Gewindehülse 28 in der zentralen Bohrung 29a im Grundkörper 12 angeordnete Lagerbuchse 40 auf. In der gezeigten Ausführungsform ist die Gewindespindel 39 aus einer Differentialgewindespindel gebildet, die über einen ersten Gewindeabschnitt 39a mit einer Innengewindebohrung der Gewindehülse 28 und über einen zweiten Gewindeabschnitt 39b mit einer Innengewindebohrung der Lagerbuchse 40 verschraubt ist.

Die Lagerbuchse 40 ist analog zur Gewindehülse 28 in der zentralen Bohrung 29a im Grundkörper 12 drehfest, aber axial verschiebbar angeordnet. Die drehfeste Anordnung der Lagerbuchse 40 wird durch eine drehfeste Verbindung mit einem Kolbenfortsatz 41 eines später beschriebenen Kolbens 42 erreicht, der in einer Kolbenbohrung 43 im Grundkörper 12 drehfest, aber axial verschiebbar angeordnet ist.

Zwischen der Gewindehülse 28 und der Lagerbuchse 40 ist eine Druckfeder 44 angeordnet, um einerseits ein Gewindespiel zwischen dem Außengewinde des ersten Gewindeabschnitts 39a der Gewindespindel 39 und dem Innengewinde der Gewindehülse 28 und andererseits ein Gewindespiel zwischen dem Außengewinde des zweiten Gewindeabschnitts 39b der Gewindespindel 39 und dem Innengewinde der Lagerbuchse 40 zu reduzieren.

Der so gestaltete Gewindetrieb 29 bietet für eine axiale Verschiebung der Gewindehülse 28 zwei voneinander unabhängige Möglichkeiten:

### 1) Synchrones Ein-/Aussteuern der Schneidenträger 14

Einerseits kann durch eine Verschiebung der Lagerbuchse 40 der gesamte Gewindetrieb 29 zusammen mit der Gewindehülse 28 ohne eine Verdrehung der Gewindespindel 39, d.h. ohne eine Relativbewegung zwischen der Gewindehülse 28 und der Lagerbuchse 40, verschoben werden. Diese Verstellmöglichkeit wird genutzt, um die Schneidenträger 14 synchron zwischen einer eingesteuerten Stellung, in der die an den Schneidenträgern 14 gehaltenen Schneidwerkzeuge 15 auf einem minimalen Durchmesser liegen, und einer ausgesteuerten Stellung, in der die an den Schneidenträgern 14 gehaltenen Schneidwerkzeuge 15 auf einem maximalen Durchmesser liegen, zu verstellen.

Hierzu ist der Gewindetrieb 29, im Besonderen die Lagerbuchse 40, zug-/druckfest mit dem bereits erwähnten Kolben 42 verbunden. Der Kolben 42 ist in einer Kolbenbohrung 43 im Grundkörper 12 drehfest, aber axial verschiebbar angeordnet. Man erkennt in Fig. 2, dass die Kolbenbohrung 43 über eine Verbindungsbohrung 46 mit der zentralen Bohrung 29a verbunden ist. Der stufenartig ausgebildete Kolben 42 weist einen Kolbenfortsatz 41 auf, der die Verbindungsbohrung 46 durchdringt und im Bereich der zentralen Bohrung 29a dreh- sowie zug-/druckfest mit der Lagerbuchse 40 verbunden ist. Die drehfeste Anordnung des Kolbens 42 in der Kolbenbohrung 43 wird durch einen Sperrstift 47 erreicht, der in einen axialen Längsschlitz 48 am Außenumfang des Kolbens 42 eingreift und in einer radialen Stufenbohrung 49 im Grundkörper 12 lösbar gehalten ist. Wie die Fig. 2 zeigt, wird der Eingriff des Sperrstifts 47 in den Längsschlitz 48 des Kolbens 42 durch eine Sicherungsschraube 50 gesichert. Der Sperrstift 47 hat einen im Durchmesser vergrößerten Kopf 51, der radial nach innen gegen eine Stufe 52 der Stufenbohrung 49 anschlägt. Durch die so erreichte Festlegung des Sperrstifts 47 in radialer Richtung lässt sich verhindern, dass der Sperrstift 47 gegen den Grund des Längsschlitzes 48 drückt und dadurch die axiale Verschiebbarkeit des Kolbens 42 behindert.

Zwischen dem Kolben 42 und dem Grundkörper 12 ist eine Druckfeder 53 gespannt, die den Kolben 42 in Fig. 2 nach rechts drängt. Grundkörperseitig ist die Druckfeder 53 an einer zwischen der Verbindungsbohrung 46 und der zentralen Bohrung 29a ausgebildeten Stufe 54 abgestützt, kolbenseitig ist die Druckfeder 53 an einer den Kolbenfortsatz 41 des Kolbens 42 umgebenden Ringfläche 55 abgestützt.

Eine zwischen der Verbindungsbohrung 46 und der Kolbenbohrung 43 gebildete Stufe 56 bildet einen Axialanschlag für den Kolben 42. Der Kolben 42 wird in der gezeigten Ausführungsform fluidisch gegen die Federkraft der Druckfeder 53 in Fig. 2 nach links angetrieben. Hierzu ist der Kolben 42 in der Kolbenbohrung 43 abgedichtet aufgenommen. Über einen im Grundkörper 12 ausgebildeten Druckkanal 75 wird in einen vom Kolben 42 begrenzten Druckraum 76 der Kolbenbohrung 43 ein Fluiddruck eingespeist, wodurch der Kolben 42 gegen die Federkraft der Druckfeder 53 in Fig. 2 nach links verdrängt wird. Eine Verdrängung des Kolbens 42 bewirkt eine gleichgerichtete Verschiebung der Lagerbuchse 40 und damit des Gewindetriebs 29 und der Gewindehülse 28.

Die an den Steuerschrägen 31 der Gewindehülse 28 abgestützten Schneidenträger 14 können daher durch eine werkzeugmaschinenseitig bewerkstelligte Druckbeaufschlagung des Kolbens 42 synchron ein- und ausgesteuert, d.h. radial nach innen und außen verstellt, werden.

### 2) Synchrone Grob- oder Voreinstellung der Schneidwerkzeuge 15

Andererseits kann durch eine Verdrehung der Gewindespindel 39, z.B. in dem in Fig. 2 gezeigten Zustand, in dem der Kolben 42 gegen den Anschlag 56 anliegt, die Gewindehülse 28 relativ zur Lagerbuchse 40 verstellt werden. Aufgrund der dreh- und zug-/druckfesten Verbindung mit dem Kolben 42 ändert sich bei einer Verdrehung der Gewindespindel 39 weder die axiale Lage noch die Drehlage der Lagerbuchse 40. Durch eine geeignete Auslegung des Steigungsunterschieds zwischen dem ersten Gewindeabschnitt 39a und dem zweiten Gewindeabschnitt 39b der Gewindespindel 39 lässt sich eine präzise Verschiebung der Gewindehülse 28 und damit eine präzise Verstellung der Schneidenträger 14 erreichen. Diese Verstellmöglichkeit kann für eine synchrone Grobeinstellung der an den Schneidenträgern 14 gehaltenen Schneidwerkzeuge 15 in Richtung eines vorgegebenen Nenndurchmessers genutzt.

Hierzu weist die Stelleinrichtung 16 ein am Stirnende des Grundkörpers 12 drehbeweglich, aber axialfest gehaltenes Betätigungselement 57 auf, das mit der Gewindespindel 39 drehfest, aber axialbeweglich in Eingriff ist. In der gezeigten Ausführungsform hat das Betätigungselement 57 einen im Querschnitt viereckigen Fortsatz 58, der formschlüssig in eine im Querschnitt viereckige Eingriffsöffnung 59 der Gewindespindel 39 eingreift. Mit dem Betätigungselement 57 wird auch die Gewindespindel 39 verdreht. Durch die Verschraubung mit der Gewindehülse 28 wird diese bei einer Verdrehung der Gewindespindel 39 axial verschoben. Im Hinblick auf eine beispielsweise manuelle Betätigung des Betätigungselements 57 kann das Betätigungselement, wie in Fig. 1 zu sehen, einen Skalenring 60 aufweisen, der eine überprüfbare Verdrehung des Betätigungselements 57 und damit der Gewindespindel 39 ermöglicht.

Die an den Steuerschrägen der Gewindehülse 28 abgestützten Schneidenträger 14 können daher durch eine manuelle oder auch werkzeugmaschinenseitig bewerkstelligte Drehbetätigung des Betätigungselements 57 synchron auf einen vorgegebenen Nenndurchmesser eingestellt werden. Diese Voreinstellung kann in dem in Fig. 2 gezeigten ausgesteuerten Zustand der Schneidenträger 14 erfolgen, in dem die Schneidwerkzeuge 15 auf einem maximalen Durchmesser liegen. Die Voreinstellung kann natürlich aber auch in einem eingesteuerten Zustand der Schneidenträger 14 erfolgen.

### Justiereinrichtung 17

Gerade für die Bearbeitung einer Zylinderbohrung eines Verbrennungsmotors ist es jedoch entscheidend, dass alle Schneidwerkzeuge 15 exakt auf einem vorgegebenen Nenndurchmesser des Zerspanungswerkzeugs 10 liegen. Um dieser Forderung gerecht zu werden, müssen die Schneidwerkzeuge 15 µm-genau auf ein vorgegebenes Nenndurchmessermaß nachjustiert werden können. Das ist beispielsweise dann erforderlich, wenn das Zerspanungswerkzeug 10 neu zusammengesellt wird, oder wenn ein Schneidenverschleiß eine Nachjustierung einzelner Schneidwerkzeuge 15 erforderlich macht.

Zu diesem Zweck sind die Schneidenträger 14 jeweils gegenüber dem Grundkörper 12, im Besonderen der im Grundkörper 12 angeordneten zentralen Stelleinrichtung 16, lagejustierbar ausgeführt. Jedem Schneidenträger 14 ist eine individuell betätigbare Justiereinrichtung 17 zugeordnet, über die der Schneidenträger 14 und damit das an dem Schneidenträger 14 gehaltene Schneidwerkzeug 15 relativ zum Grundkörper 12, im Besonderen der Längsmittelachse oder Drehachse 11, radial einstellbar sind.

Die auf der Seite des längeren Hebelarms in den Trägerkörper 18 integrierte Justiereinrichtung 17 weist eine wandsegmentgeschlitzte Gewindebuchse 61, die in einer im Wesentlich radial verlaufenden Gewindebuchsenbohrung 62 im Trägerkörper 18 stoff-, kraft- und/oder formschlüssig, in Bezug auf die Bohrungsachse der Gewindebuchsenbohrung 62 dreh- und axialfest angeordnet ist, eine in die Gewindebuchse 61 eingeschraubte Stellschraube 63, die über den bereits erwähnten Druckstift 26 mit der entsprechenden Steuerschräge 31 der Gewindehülse 28 zusammenwirkt, und eine in Fig. 3 zu erkennende, seitlich der Gewindebuchse 61 angeordnete Spannschraube 64 auf, die in einer quer zur Gewindebuchsenbohrung 62 verlaufenden Gewindebohrung 65 im Trägerkörper 18 eingeschraubt ist und als ein Druckelement ein elastisch verformbares Wandsegment 66 nach innen gegen die Stellschraube 63 drückt.

Die die Spannschraube 64 aufnehmende Gewindebohrung 65 ist über eine im Durchmesser größere Eingriffsbohrung 67 im Grundkörper 12 vom Außenumfang des Grundkörpers 12 her zugänglich. Der Durchmesser der Eingriffsbohrung 67 im Grundkörper 12 kann so groß sein, dass die gegen das Wandsegment 66 der Gewindebuchse 61 drückende Spannschraube 64 in einer beliebigen Schwenklage des Schneidenträgers 14 mittels eines durch die Eingriffsbohrung 67 geführten Werkzeugschlüssels, der in eine Schlüsselweite der Spannschraube 64 eingreift, betätigbar ist. Alternativ dazu kann der Durchmesser der Eingriffsbohrung 67 aber auch nur so groß sein, dass ein durch die Eingriffsbohrung 67 geführter Werkzeugschlüssel nur für einen vorgegebenen Schwenklagenbereich des Schneidenträgers 14 in die Schlüsselweite der Spannschraube 64 einführbar ist.

Die Gewindebuchsenbohrung 62 durchdringt den Trägerkörper 18 in radialer Richtung, wie es in Fig. 2 gezeigt ist, so dass die Stellschraube 63 radial von außen her mittels eines geeigneten Werkzeugschlüssels, der in eine Schlüsselweite der Stellschraube 63 eingreift, verstellbar ist.

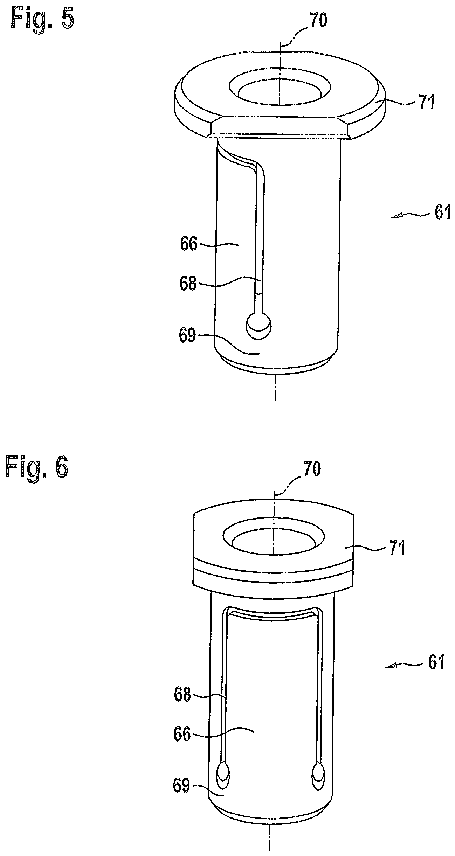

Die Gewindebuchse 61 ist im Besonderen in Fig. 5 gezeigt. Zu erkennen ist das Wandsegment 66, das durch einen die Gewindebuchsenwand durchdringenden U-förmigen Schlitz 68 ausgebildet ist. Die Fig. 5 zeigt, dass sich das Wandsegment 66 in Axialrichtung der Gewindebuchse 61 erstreckt und an einem ein Materialgelenk bildenden Abschnitt 69 noch in der Weise mit der Gewindebuchsenwand verbunden ist, dass es in einer Richtung quer zur Buchsenachse 70 elastisch nach innen verformbar ist.

An dem grundkörperseitigen Ende weist die Gewindebuchse 61 einen Flansch 71 auf, der durch Anlage an eine trägerkörperseitigen Anschlag 74 in der Gewindebuchsenbohrung 62 die Lage der Gewindebuchse 61 in Richtung der Bohrungsachse 72 der Gewindebuchsenbohrung 62 im Trägerkörper 18 bestimmt.

Durch eine Druckbeaufschlagung des elastisch nachgiebigen Wandsegments 66 der Gewindebuchse 61 mittels einer Schraubbetätigung der Spannschraube 64 kann der dem Wandsegment 66 entsprechende Bereich des Innengewindes der Gewindebuchse 61 gegen das Außengewinde der in die Gewindebuchse 61 eingeschraubten Stellschraube 63 gedrückt werden, um das Gewindespiel zwischen dem Innengewinde und dem Außengewinde zu reduzieren. Durch die Verdrängung des dem Wandsegment 66 entsprechenden Bereichs des Innengewindes der Gewindebuchse 61 gegen das Außengewinde der Stellschraube 63 werden die Gewindeflanken des Innengewindes in beiden Richtungen gegen die gegenüberliegenden Gewindeflanken des Außengewindes gedrückt. Es wird also das Gewindespiel beiderseits jeder Gewindeflanke des dem Wandsegment 66 entsprechenden Bereichs des Innengewindes der Gewindebuchse 61 reduziert. Dank des als Spannschraube 64 ausgebildeten Druckelements kann das Gewindespiel nicht nur reduziert, sondern soweit eingestellt oder korrigiert werden, dass eine Schraubbetätigung der Stellschraube 63 gerade noch möglich ist, ein störendes Gewindespiel aber beseitigt ist.

Die Fig. 2 zeigt, dass die Stellschraube 63 an ihrem grundkörperseitigen, abgerundeten Ende an dem bereits erwähnten Druckstift 26 und über den Druckstift 26 an der zugeordneten Steuerschräge 31 der Gewindehülse 28 der zentralen Stelleinrichtung 16 abgestützt ist.

Über die in den Schneidenträger 14 integrierte Justiereinrichtung 17 wird also eine spielfreie Feinjustierung des Schneidwerkzeugs 15 relativ zur Längsmittelachse oder Drehachse 11 des Zerspanungswerkzeugs 10 ermöglicht.

Durch die Integration der Justiereinrichtung 17 in den Trägerkörper 18 wird ein kompakt aufgebauter Schneidenträger 14 erhalten, der sich mit der integrierten Justiereinrichtung 17 und dem Schneidwerkzeug 15 als eine austauschbare Komponente handhaben und am Grundkörper 12 des Zerspanungswerkzeugs 10 anbringen lässt.

### Weitere Ausführungsformen

Selbstverständlich sind Abwandlungen von der zuvor beschriebenen Ausführungsform möglich, ohne den durch die Ansprüche definierten Grundgedanken der Erfindung zu verlassen.

In der gezeigten Ausführungsform ist die Justiereinrichtung in den Schneidenträger integriert. Das ist insbesondere dann von Vorteil, wenn eine zentrale Stelleinrichtung vorgesehen ist. Das muss aber nicht so sein. Wenn das Zerspanungswerkzeug über keine zentrale Stelleinrichtung verfügt, kann die Justiereinrichtung entweder in den Schneidenträger oder aber in den Grundkörper integriert sein. Entscheidend ist lediglich, dass die Justiereinrichtung funktional zwischen dem Schneidwerkzeug und dem Grundkörper angeordnet ist.

Des Weiteren kann die Stellschraube mit dem Grundkörper oder dem Schneidenträger mittelbar, beispielsweise wie in der zuvor beschriebenen Ausführungsform, oder aber unmittelbar zusammenwirken.

In der gezeigten Ausführungsform trägt jeder Schneidenträger genau ein Schneidwerkzeug. Der Schneidenträger kann wenigstens eine weitere Schneidplatte tragen, die - in axialer Richtung des Zerspanungswerkzeugs gesehen - beispielsweise auf Höhe der Schwenkachse des Schneidenträgers angeordnet ist. Die Lage der so angeordneten weiteren Schneidplatte wäre dann von einer mittels der Stelleinrichtung und/oder Justiereinrichtung durchgeführten Verstellung oder Justierung im Wesentlichen unbeeinflusst und kann beispielsweise für die Erzeugung einer Fase oder dergleichen vorgesehen sein.

Das Schneidwerkzeug kann aus einem Schneideinsatz, einer Schneidplatte oder dergleichen gebildet sein.

In der gezeigten Ausführungsform ist jeder Schneidenträger in einer Aufnahmetasche am Grundkörper wippenartig schwenkbar angeordnet. Abweichend davon kann jeder Schneidenträger aber auch in der Art eines elastisch verformbaren Biegebalkens ausgebildet und in einer Aufnahmetasche am Grundkörper eines Zerspanungswerkzeugs fest verschraubt sein. In einer anderen Abwandlung kann jeder Schneidenträger in einer Aufnahmetasche am Grundkörper eines Zerspanungswerkzeugs radial verschiebbar gehalten sein. Die oben verwendeten Angaben (in radialer Richtung) "ein-/aussteuerbar", "ein-/ausgesteuert", "ein-/aussteuern" etc. sind daher allgemein in dem Sinne zu verstehen, dass der oder die Schneidenträger (in radialer Richtung) verstellbar sind, wobei die Verstellung durch Verschwenken (wie in der gezeigten Ausführungsform), durch elastische Verformung oder durch geradliniges Verschieben des jeweiligen Schneidenträgers erfolgen kann.

In der gezeigten Ausführungsform erfolgt die Druckbeaufschlagung des Kolbens fluidisch, im Besonderen pneumatisch oder hydraulisch. Alternativ dazu kann die Druckbeaufschlagung des Kolbens elektromotorisch oder elektromagnetisch eingeleitet werden. Das Zerspanungswerkzeug kann daher einen hydraulisch, pneumatisch, elektromotorisch oder elektromagnetisch arbeitenden Stellantrieb aufweisen, der den Kolben antreibt.

In der gezeigten Ausführungsform hat das Zerspanungswerkzeug werkzeugmaschinenspindelseitig einen HSK (Hohlschaftkegel)-Schaft. Alternativ dazu kann aber auch ein sogenannter SK (Steilkegel)-Schaft oder dergleichen vorgesehen sein.

In der gezeigten Ausführungsform wird das Zerspanungswerkzeug zur Zylinderbohrungsbearbeitung eingesetzt. Die Erfindung ist aber nicht auf diese Anwendung beschränkt. Ein erfindungsgemäßes Zerspanungswerkzeug kann für die Nachbearbeitung oder Feinbearbeitung einer Bohrung auf einen vorgegebenen Nenndurchmesser verwendet werden.

Des Weiteren sind in der gezeigten Ausführungsform mehrere Schneidenträger am Grundkörper des Zerspanungswerkzeugs in axialer Richtung auf gleicher Höhe und in vorgegebenen Winkelabständen um die Längsmittelachse oder Drehachse des Grundkörpers angeordnet. Die Anordnung der Schneidenträger auf gleicher Höhe in axialer Richtung ist aber nicht zwingend. Die Schneidenträger können auch axial versetzt, beispielsweise wendelförmig versetzt, angeordnet sein.

Des Weiteren kann das Zerspanungswerkzeug genau einen oder wie in der beschriebenen Ausführungsform mehrere Schneidenträger haben.

Die an der Gewindehülse vorgesehenen Steuerflächen können unmittelbar in das Gewindehülsenmaterial eingearbeitet sein. D.h., dass die Stützleisten entfallen können. Des Weiteren kann die Gewindehülse anstelle einzelner Steuerflächen eine rotationssymmetrische Konusfläche aufweisen, an der der oder die Schneidenträger mittelbar oder unmittelbar abgestützt ist oder sind.

## Patentansprüche

1. Zerspanungswerkzeug (10) mit einem sich entlang einer Längsmittelachse oder Drehachse (11) erstreckenden Grundkörper (12), wenigstens einem am Grundkörper (12) radial einstellbar angeordneten Schneidenträger (14) und einer Stelleinrichtung (16) zur Einstellung der Lage des Schneidenträgers (14) gegenüber dem Grundkörper (12), wobei
die Stelleinrichtung (16) eine im Grundkörper (12) drehfest, aber entlang der Längsmittelachse oder Drehachse (11) verschiebbar angeordnete Gewindehülse (28) und einen die Gewindehülse (28) antreibsenden Gewindetrieb (29) aufweist,
der Gewindetrieb (29) eine mit der Gewindehülse (28) verschraubte Gewindespindel (39) aufweist,
die Gewindespindel (39) aus einer Differentialgewindespindel gebildet ist,
der Gewindetrieb (29) des Weiteren eine im Grundkörper (12) drehfest gehaltene Lagerbuchse (40) aufweist,
die Differentialgewindespindel (39) mit einem ersten Gewindeabschnitt (39a) mit der Gewindehülse (28) und mit einem zweiten Gewindeabschnitt (39b) mit der Lagerbuchse (40) verschraubt ist, und
die Gewindehülse (28) über ein Keilgetriebe mit dem Schneidenträger (14) zusammenwirkt, **dadurch gekennzeichnet, dass**
eine Druckfeder (44) zwischen der Gewindehülse (28) und der Lagerbuchse (40) angeordnet ist.

2. Zerspanungswerkzeug (10) nach Anspruch 1, **dadurch gekennzeichnet, dass** der Gewindetrieb (29) durch einen Kolben (42), der einen Druckraum (76) im Grundkörper (12) begrenzt, axial verschiebbar ist.

3. Zerspanungswerkzeug (10) nach Anspruch 1 oder 2, **dadurch gekennzeichnet, dass** die Lagerbuchse (40) axial zug-/druckfest mit einem Kolben (42), der einen Druckraum (76) im Grundkörper (12) begrenzt, verbunden ist.

4. Zerspanungswerkzeug (10) nach Anspruch 3, **dadurch gekennzeichnet, dass** der Kolben (42) gegenüber dem Grundkörper (12) elastisch abgestützt ist.

5. Zerspanungswerkzeug (10) nach einem der vorhergehenden Ansprüche, **dadurch gekennzeichnet, dass** die Gewindespindel (39) an der Stirnseite des Grundkörpers (12) betätigbar ist.

6. Zerspanungswerkzeug (10) nach Anspruch 5, **gekennzeichnet durch** ein am Stirnende des Grundkörpers (12) drehbeweglich, aber axialfest gehaltenes Betätigungselement (57), das mit der Gewindespindel (39) drehfest, aber axialbeweglich in Eingriff ist.

7. Zerspanungswerkzeug (10) nach einem der vorhergehenden Ansprüche, **gekennzeichnet durch** eine zwischen dem Schneidenträger (14) und der Gewindehülse (28) angeordnete Justiereinrichtung (17) zur radialen Lagejustierung des Schneidenträgers (14) gegenüber dem Grundkörper (12).

8. Zerspanungswerkzeug (10) nach Anspruch 7, **dadurch gekennzeichnet, dass** die Justiereinrichtung (17) eine in den Schneidenträger (14) integrierte Gewindebuchse (61) mit einem radialelastisch verformbaren Wandsegment (66), eine mit der Gewindebuchse (61) verschraubte und mit ihrem von der Gewindebuchse (61) hervorragenden Ende an der Gewindehülse (28) abgestützte Stellschraube (63), und ein an dem Schneidenträger (14) angeordnetes, das Wandsegment (66) gegen die Stellschraube (63) drückendes Druckelement (64) aufweist.

9. Zerspanungswerkzeug (10) nach Anspruch 8, **dadurch gekennzeichnet, dass** das Wandsegment (66) durch einen die Gewindebuchsenwand durchdringenden Schlitz (68) ausgebildet ist.

10. Zerspanungswerkzeug (10) nach einem der vorhergehenden Ansprüche, **gekennzeichnet durch** eine Vielzahl von Schneidenträgern (14), die in vorgegebenen Winkelabständen um die Längsmittelachse (11) herum angeordnet und jeweils an der Gewindehülse (28) abgestützt sind.

## Claims

1. Cutting tool (10) comprising a main body (12) which extends along a longitudinal central axis or axis of rotation (11), at least on cutting insert carrier (14) arranged radially adjustably on the main body (12), and an adjusting device (16) for adjusting the position of the cutting insert carrier (14) with respect to the main body (12), wherein
the adjusting device (16) comprises a threaded sleeve (28) arranged non-rotatably but adjustably along the longitudinal central axis or axis of rotation (11) in the main body (12) and a screw drive (29) driving the threaded sleeve (28),
the screw drive (29) comprises a threaded spindle (39) screwed with the threaded sleeve (28),
the threaded spindle (39) is formed from a differential threaded spindle,
the screw drive (29) further comprises a bearing bushing (40) held non-rotatably in the main body (12),
the differential threaded spindle (39) is screwed with a first threaded portion (39a) to the threaded sleeve (28) and with a second threaded portion (39b) to the bearing bushing (40), and
the threaded sleeve (28) cooperates with the cutting insert carrier (14) via a wedge gear, **characterized in that**
a compression spring (44) is arranged between the threaded sleeve (28) and the bearing bushing (40)

2. Cutting tool (10) according to claim 1, **characterized in that** the screw drive (29) can be displaced axially by a piston (42) which delimits a pressure chamber (76) in the main body (12).

3. Cutting tool (10) according to claim 1 or 2, **characterized in that** the bearing bushing (40) is connected in an axially tension-proof/pressure-resistant manner to a piston (42) which delimits a pressure chamber (76) in the main body (12).

4. Cutting tool (10) according to claim 3, **characterized in that** the piston (42) is supported elastically with respect to the main body (12).

5. Cutting tool (10) according to one of the preceding claims, **characterized in that** the threaded spindle (39) can be actuated on the front face of the main body (12).

6. Cutting tool (10) according to claim 5, **characterized by** an actuating element (57) held rotationally movably but in an axially fixed manner on the front end of the main body (12), wherein the actuating element engages with the threaded spindle (39) non-rotatably but axially movably.

7. Cutting tool (10) according to one of the preceding claims, **characterized by** an alignment device (17) arranged between the cutting insert carrier (14) and the threaded sleeve (28) for radial positional adjustment of the cutting insert carrier (14) with respect to the main body (12).

8. Cutting tool (10) according to claim 7, **characterized in that** the alignment device (17) comprises a threaded bushing (61) integrated in the cutting insert carrier (14) having a radially elastically deformable wall segment (66), an adjusting screw (63) screwed to the threaded bushing (61) and supported on the threaded sleeve (28) with its end projecting from the threaded bushing (61), and a pressure element (64) arranged on the cutting insert carrier (14) which presses the wall segment (66) against the adjusting screw (63).

9. Cutting tool (10) according to claim 8, **characterized in that** the wall segment (66) is formed by a slot (68) which penetrates the threaded bushing wall.

10. Cutting tool (10) according to one of the preceding claims, **characterized by** a plurality of cutting insert carriers (14) which are arranged around the longitudinal central axis (11) at predefined angular distances and which are each supported on the threaded sleeve (28).

## Revendications

1. Outil d'usinage par enlèvement de copeaux (10) avec un corps de base (12) s'étendant le long d'un axe médian longitudinal ou d'un axe de rotation (11), au moins un porte-lame (14) disposé de manière réglable radialement au niveau du corps de base (12) et un équipement de réglage (16) destiné au réglage de la position du porte-lame (14) par rapport au corps de base (12), dans lequel
l'équipement de réglage (16) présente un manchon fileté (28) disposé de manière coulissante fixe en rotation dans le corps de base (12) mais le long de l'axe médian longitudinal ou de l'axe de rotation (11) et un entraînement fileté (29) entraînant le manchon fileté (28),
l'entraînement fileté (29) présente une broche filetée (39) vissée avec le manchon fileté (28),
la broche filetée (39) est formée à partir d'une broche filetée différentielle,
l'entraînement fileté (29) présente en outre un coussinet (40) maintenu fixe en rotation dans le corps de base (12),
la broche filetée différentielle (39) est vissée avec une première section filetée (39a) avec le manchon fileté (28) et avec une seconde section filetée (39b) avec le coussinet (40), et
le manchon fileté (28) coopère avec le porte-lame (14) via un entraînement à clavette, **caractérisé en ce que**
un ressort de pression (44) est disposé entre le manchon fileté (28) et le coussinet (40).

2. Outil d'usinage par enlèvement de copeaux (10) selon la revendication 1, **caractérisé en ce que** l'entraînement fileté (29) peut coulisser axialement par le biais d'un piston (42) qui délimite une chambre de pression (76) dans le corps de base (12).

3. Outil d'usinage par enlèvement de copeaux (10) selon la revendication 1 ou 2, **caractérisé en ce que** le coussinet (40) est relié axialement de manière fixe en traction/pression avec un piston (42) qui délimite une chambre de pression (76) dans le corps de base (12).

4. Outil d'usinage par enlèvement de copeaux (10) selon la revendication 3, **caractérisé en ce que** le piston (42) est soutenu élastiquement par rapport au corps de base (12).

5. Outil d'usinage par enlèvement de copeaux (10) selon l'une quelconque des revendications précédentes, **caractérisé en ce que** la broche filetée (39) est actionnable au niveau de la face avant du corps de base (12).

6. Outil d'usinage par enlèvement de copeaux (10) selon la revendication 5, **caractérisé par** un élément d'actionnement (57) mobile en rotation au niveau de l'extrémité avant du corps de base (12), mais maintenu fixe axialement, qui est en prise de manière fixe en rotation avec la broche filetée (39), mais mobile axialement.

7. Outil d'usinage par enlèvement de copeaux (10) selon l'une quelconque des revendications précédentes, **caractérisé par** un équipement d'ajustement (17), disposé entre le porte-lame (14) et le manchon fileté (28), destiné à l'ajustement radial du porte-lame (14) par rapport au corps de base (12).

8. Outil d'usinage par enlèvement de copeaux (10) selon la revendication 7, **caractérisé en ce que** l'équipement d'ajustement (17) présente une douille filetée (61) intégrée dans le porte-lame (14) avec un segment de paroi (66) déformable par élasticité radiale, une vis de réglage (63) vissée avec la douille filetée (61) et soutenue avec son extrémité faisant saillie de la douille filetée (61) au niveau du manchon fileté (28), et un élément de pression (64) disposé au niveau du porte-lame (14), appuyant le segment de paroi (66) contre la vis de réglage (63).

9. Outil d'usinage par enlèvement de copeaux (10) selon la revendication 8, **caractérisé en ce que** le segment de paroi (66) est réalisé par le biais d'une fente (68) traversant la paroi de douille filetée.

10. Outil d'usinage par enlèvement de copeaux (10) selon l'une quelconque des revendications précédentes, **caractérisé par** une pluralité de porte-lames (14) qui sont disposés autour de l'axe médian longitudinal (11) à intervalles angulaires prédéfinis et sont respectivement soutenus au niveau du manchon fileté (28).
